(19) Europäisches Patentamt
European Patent Office
Office européen des brevets

(11) Veröffentlichungsnummer: **0 356 386 B1**

# (12) EUROPÄISCHE PATENTSCHRIFT

(45) Veröffentlichungstag der Patentschrift: **28.09.94**

(51) Int. Cl.5: **C09B 11/26**, B41M 5/30, B41M 5/136

(21) Anmeldenummer: **89810596.0**

(22) Anmeldetag: **08.08.89**

Die Akte enthält technische Angaben, die nach dem Eingang der Anmeldung eingereicht wurden und die nicht in dieser Patentschrift enthalten sind.

## (54) Chromogene Phthalide.

(30) Priorität: **17.08.88 CH 3072/88**

(43) Veröffentlichungstag der Anmeldung:
**28.02.90 Patentblatt 90/09**

(45) Bekanntmachung des Hinweises auf die Patenterteilung:
**28.09.94 Patentblatt 94/39**

(84) Benannte Vertragsstaaten:
**AT BE CH DE ES FR GB IT LI**

(56) Entgegenhaltungen:
**DE-A- 2 163 658**
**FR-A- 2 230 648**

(73) Patentinhaber: **CIBA-GEIGY AG**
**Klybeckstrasse 141**
**CH-4002 Basel (CH)**

(72) Erfinder: **Zink, Rudolf**
**Alemannenstrasse 2**
**CH-4106 Therwil (CH)**

EP 0 356 386 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft chromogene Phthalide, Verfahren zu ihrer Herstellung und ihre Verwendung als Farbbildner in druckempfindlichen oder wärmeempfindlichen Aufzeichnungsmaterialien.

Die erfindungsgemässen chromogenen Phthalide entsprechen der allgemeinen Formel

(1) 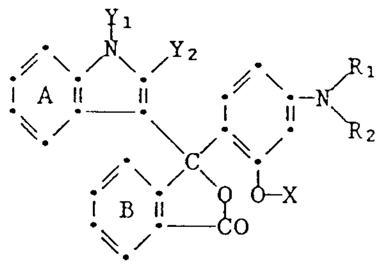

worin X, $R_1$ und $R_2$ identisch sind und je Alkyl mit 3 bis 6 Kohlenstoffatomen, $Y_1$ Wasserstoff, unsubstituiertes oder durch Halogen, Hydroxyl, Cyano oder Niederalkoxy substituiertes Alkyl mit höchstens 12 Kohlenstoffatomen, Acyl mit 1 bis 12 Kohlenstoffatomen oder unsubstituiertes oder durch Halogen, Cyano, Niederalkyl oder Niederalkoxy substituiertes Benzyl und $Y_2$ Wasserstoff, Niederalkyl oder Phenyl bedeuten und die Benzolringe A und B, unabhängig voneinander, unsubstituiert oder durch Halogen, Nitro, Niederalkyl, Niederalkoxy, Niederalkylthio, Niederalkoxycarbonyl, Amino, Mononiederalkylamino, Diniederalkylamino oder Niederalkylcarbonylamino substituiert sind.

Chromogene Phthalide, bei denen die Reste $R_1$, $R_2$ und X identisch sind, werden auch in der FR-A-2, 230, 648 offenbart.

Niederalkyl, Niederalkoxy und Niederalkylthio stellen bei der Definition der Reste der Phthalide solche Gruppen oder Gruppenbestandteile dar, die 1 bis 6, insbesondere 1 bis 3 Kohlenstoffatome aufweisen. Beispiele für derartige Gruppen sind Ethyl, n-Propyl, Isopropyl, n-Butyl, sek. -Butyl, tert.Butyl, Amyl, Isoamyl, tert.Amyl oder Hexyl, Methoxy, Ethoxy, Isopropoxy, Isobutoxy oder tert.Butoxy bzw. Methylthio, Ethylthio, Propylthio oder Butylthio.

Halogen bedeutet beispielsweise Fluor, Brom oder vorzugsweise Chlor.

Acyl ist besonders Formyl, Niederalkylcarbonyl, wie z.B. Acetyl oder Propionyl, oder Benzoyl. Weitere Acylreste können Niederalkylsulfonyl, wie z.B. Methylsulfonyl oder Ethylsulfonyl sowie Phenylsulfonyl sein. Benzoyl und Phenylsulfonyl können durch Halogen, Methyl, Methoxy oder Ethoxy substituiert sein.

X, $R_1$ und $R_2$ können n-Propyl, Isopropyl, n-Butyl, Isobutyl, sek.Butyl, n-Pentyl, Isopentyl oder n-Hexyl sein. Insbesondere sind X, $R_1$ und $R_2$ n-Propyl oder vor allem n-Butyl.

Bedeutet $Y_1$ Alkylgruppen, so können diese geradkettig oder verzweigt sein. Beispiele solcher Alkylreste sind Methyl, Ethyl, n-Propyl, Isopropyl, n-Butyl, sek.-Butyl, Amyl, Isoamyl, n-Hexyl, 2-Ethyl-hexyl, n-Heptyl, n-Octyl, Isooctyl, n-Nonyl, Isononyl oder n-Dodecyl.

Stellt $Y_1$ einen substituierten Alkylrest dar, so handelt es sich vor allem um Cyanoalkyl, Halogenalkyl, Hydroxyalkyl, Alkoxyalkyl jeweils vorzugsweise mit insgesamt 2 bis 6 Kohlenstoffatomen, wie z.B. $\beta$-Cyanoethyl, $\beta$-Chlorethyl, $\beta$-Hydroxyethyl, $\gamma$-Hydroxypropyl, $\beta,\gamma$-Dihydroxypropyl, $\beta$-Methoxyethyl, $\beta$-Ethoxyethyl oder $\gamma$-Methoxypropyl.

Bevorzugte Substituenten in der Benzylgruppe von $Y_1$ sind z.B. Halogen, Methyl oder Methoxy. Beispiele für derartige araliphatische Reste sind p-Methylbenzyl, o- oder p-Chlorbenzyl.

Der N-Substituent $Y_1$ ist vorzugsweise Benzyl, Acetyl, Propionyl, Wasserstoff oder besonders Alkyl mit 1 bis 8 Kohlenstoffatomen, wie z.B. Methyl, Ethyl, n-Butyl oder n-Octyl.

$Y_2$ ist vorzugsweise Phenyl oder vor allem Methyl.

Der Benzolring A ist vorzugsweise nicht weiter substituiert. Wenn A Substituenten enthält, so sind diese besonders Halogen, Niederalkyl z.B. Methyl oder tert.Butyl oder Niederalkoxy z.B. Methoxy.

Der Benzolring B kann als Substituent vorteilhafterweise Halogen, Nitro, Niederalkyl, Niederalkoxy oder Diniederalkylamino enthalten. Vorzugsweise ist der Benzolring B unsubstituiert oder durch 1 bis 4 Halogenatome substituiert.

Praktisch wichtige Phthalide entsprechen der Formel

(2) 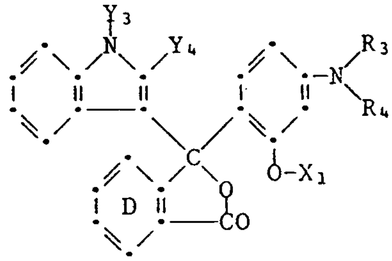

worin $X_1$, $R_3$ und $R_4$ identisch sind und Propyl, Butyl, Pentyl oder Hexyl, $Y_3$ $C_1$-$C_8$-Alkyl und $Y_4$ Methyl oder Phenyl bedeuten und
der Benzolring D unsubstituiert oder durch Halogen, Niederalkyl oder Diniederalkylamino substituiert ist.

Unter den Verbindungen der Formel (2) sind die Phthalide, in denen der Benzolkern D unsubstituiert oder durch Halogen, besonders durch 1 bis 4 Chloratome substituiert ist, bevorzugt.

Von besonderem Interesse sind Phthalide der Formel

(3) 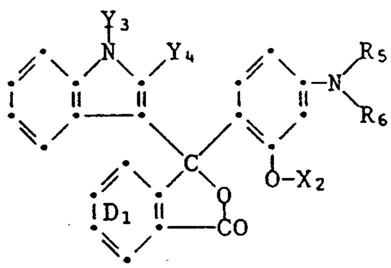

worin
$X_2$, $R_5$ und $R_6$ identisch sind und je n-Propyl oder n-Butyl,
$Y_3$ $C_1$-$C_8$-Alkyl und
$Y_4$ Methyl oder Phenyl bedeuten und
der Benzolkern $D_1$ unsubstituiert oder durch vier Chloratome substituiert ist.

Unter diesen Verbindungen der Formel (3) sind diejenigen besonders bevorzugt, bei denen $X_2$, $R_5$ und $R_6$ n-Butyl bedeuten.

Die erfindungsgemässen Phthalide der Formeln (1) bis (3) stellen neue chromogene Verbindungen dar und können nach an sich bekannten Methoden hergestellt werden. Ein Verfahren zur Herstellung der Verbindungen der Formel (1) besteht darin, dass man in beliebiger Reihenfolge ein Mol eines Anhydrids der Formel

(4) 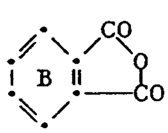

mit einem Mol einer Indolverbindung der Formel

(5) 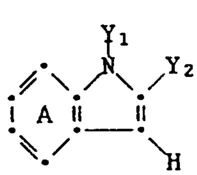

und einem Mol einer Aminobenzolverbindung der Formel

(6) 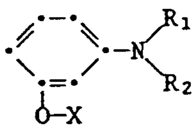

umsetzt, worin in den Formeln (4), (5) und (6) A, B, $R_1$, $R_2$, X, $Y_1$ und $Y_2$ die angegebene Bedeutung haben.

Vorteilhafterweise werden die erfindungsgemässen Phthalide dadurch hergestellt, dass man eine Verbindung der Formel

(7) 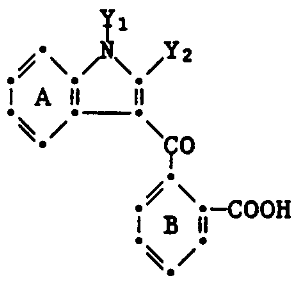

mit einer Aminobenzolverbindung der Formel (6) umsetzt, worin in Formel (7) A, B, $Y_1$ und $Y_2$ die angegebene Bedeutung haben.

Die Umsetzungen werden vorzugsweise so durchgeführt, dass man die Reaktionskomponenten in Anwesenheit eines sauren Entwässerungsmittels bei einer Temperatur von 20 °C bis 140 °C zur Reaktion bringt. Beispiele für derartige Kondensationsmittel sind Essigsäureanhydrid, Zinkchlorid, Schwefelsäure, Phosphorsäure und Phosphoroxychlorid.

Die Isolierung des Endproduktes der Formel (1) erfolgt in allgemein bekannter Weise durch Einstellen des Reaktionsgemisches auf einen pH-Wert von mindestens 6, vorzugsweise 7 bis 11, z.B. mit Alkalien, wie z.B. Alkalimetallhydroxiden, Ammoniak, Alkalimetallcarbonaten oder -bicarbonaten und Abtrennen des gebildeten Niederschlags, Waschen und Trocknen oder durch Behandeln mit geeigneten organischen Lösungsmitteln, wie z.B. Methanol, Isopropanol, Benzol, Chlorbenzol oder vor allem Toluol oder Toluol/Isopropanol.

Die Phthalide der Formeln (1) bis (3) sind normalerweise farblos oder höchstens schwach gefärbt. Wenn diese Farbbildner mit einem vorzugsweise sauren Entwickler, d.h. einem Elektronenakzeptor, in Kontakt gebracht werden, so ergeben sie je nach dem verwendeten Entwickler intensive grün-blaue, blaue oder violett-blaue Farbtöne, die sublimations- und lichtecht sind. Die Phthalide der Formeln (1) bis (3) sind auch sehr wertvoll im Gemisch mit einem oder mehreren anderen bekannten Farbbildner, z.B. 3,3-(Bis-aminophenyl-)-phthaliden, 3-Indolyl-3-aminophenyl-aza- oder -diazaphthaliden, (3,3-Bis-indolyl-)-phthaliden, 3-Aminofluoranen, 2,6-Diaminofluoranen, 2,6-Diamino-3-methyl-fluoranen, 3,6-Bisalkoxyfluoranen, 3,6-Bisdiarylaminofluoranen, Leukoauraminen, Spiropyranen, Spirodipyranen, Chromenopyrazolen, Chromenoindolen, Phenoxazinen, Phenothiazinen, Chinazolinen, Rhodaminlaktamen, Carbazolylmethanen oder weiteren Triarylmethan-leukofarbstoffen, um blaue, marine-blaue, graue oder schwarze Färbungen zu ergeben.

Die Phthalide der Formeln (1) bis (3) zeigen sowohl auf aktivierten Tonen, wie auch auf phenolischen Unterlagen eine ausgezeichnete Farbintensität und Lichtechtheit. Sie eignen sich vor allem als sich schnell entwickelnde Farbbildner für die Verwendung in einem wärmeempfindlichen oder insbesondere druckempfindlichen Aufzeichnungsmaterial, das sowohl Kopier- als auch Registriermaterial sein kann. Sie zeichnen sich dadurch aus, dass sie pH stabil und in den Kapselölen hervorragend löslich sind. Nach Belichtung in CB-Blatt weisen sie eine geringe Abnahme der Farbstärke (CB-Desaktivierung) auf.

Ein druckempfindliches Material besteht beispielsweise aus mindestens einem Paar von Blättern, die mindestens einen Farbbildner der Formeln (1) bis (3) gelöst in einem organischen Lösungsmittel und einen Elektronenakzeptor als Entwickler enthalten.

Typische Beispiele für solche Entwickler sind Aktivton-Substanzen, wie Attapulgus-Ton, Säureton, Bentonit, Montmorillonit, aktivierter Ton, wie z.B. säureaktiviertes Bentonit oder Montmorillonit, ferner Zeolith, Halloysit, Siliciumdioxyd, Aluminiumoxid, Aluminiumsulfat, Aluminiumphosphat, Zinkchlorid, Zinknitrat, Zirkondioxid, aktiviertes Kaolin oder irgendein beliebiger Ton. Als Entwickler können auch sauer reagierende, organische Verbindungen, wie z.B. gegebenenfalls ringsbustituierte Phenole, Resorcine, Salicylsäuren, wie z.B. 3,5-Bis-(α,α-dimethylbenzyl-)-salicylsäure oder 3,5-Bis-(α-methylbenzyl)-salicylsäure oder Salicylsäureester und deren Metallsalze, z.B. Zinksalze, sowie ein sauer reagierendes, polymeres Material, wie z.B. ein phenolisches Polymerisat, ein Alkylphenolacetylenharz, ein Maleinsäure-Kolophonium-Harz oder ein teilweise oder vollständig hydrolysiertes Polymerisat von Maleinsäureanhydrid mit Styrol, Ethylen oder Vinylmethylether, oder Carboxymethylen verwendet werden. Es können auch Mischungen der genannten monomeren und polymeren Verbindungen eingesetzt werden. Besonders bevorzugte Entwickler sind säureaktiviertes Bentonit, Zinksalicylate oder die Kondensationsprodukte von p-substituierten Phenolen mit Formaldehyd. Die letzteren können auch mit Zink modifiziert sein.

Die Entwickler können zusätzlich auch im Gemisch mit an sich unreaktiven oder wenig reaktiven Pigmenten oder weiteren Hilfstoffen wie Kieselgel oder UV-Absorbern, wie z.B. 2-(2′-Hydroxyphenyl-)benztriazolen eingesetzt werden. Beispiele für solche Pigmente sind: Talk, Titandioxid, Aluminiumoxid, Aluminiumhydroxyd, Zinkoxid, Kreide, Tone wie Kaolin, sowie organische Pigmente, z.B. Harnstoff-Formaldehydkondensate (BET-Oberfläche 2-75 $m^2/g$) oder Melamin-Formaldehyd-Kondensationsprodukte.

Der Farbbildner liefert an den Punkten, an denen er mit dem Elektronenakzeptor in Kontakt kommt, eine gefärbte Markierung. Um eine frühzeitige Aktivierung der in dem druckempfindlichen Aufzeichnungsmaterial vorhandenen Farbbildner zu verhindern, werden diese in der Regel von dem Elektronenakzeptor getrennt. Dies kann zweckmässig erzielt werden, indem man die Farbbildner in schaum-, schwamm- oder bienenwabenartigen Strukturen einarbeitet. Vorzugsweise sind die Farbbildner in Mikrokapseln eingeschlossen, die sich in der Regel durch Druck zerbrechen lassen.

Beim Zerbrechen der Kapseln durch Druck, beispielsweise mittels eines Bleistiftes, wird die Farbbildnerlösung auf ein benachbartes mit einem Elektronenakzeptor beschichtetes Blatt übertragen, wodurch eine farbige Stelle erzeugt wird. Die Farbe resultiert aus dem dabei gebildeten Farbstoff, der im sichtbaren Bereich des elektromagnetischen Spektrums absorbiert.

Die Farbbildner werden vorzugsweise in Form von Lösungen in organischen Lösungsmitteln eingekapselt. Beispiele für geeignete Lösungsmittel sind vorzugsweise nichtflüchtige Lösungsmittel, z.B. halogeniertes Paraffin, Benzol oder Diphenyl, wie Chlorparaffin, Trichlorbenzol, Monochlordiphenyl, Dichlordiphenyl oder Trichlordiphenyl, Ester, wie z.B. Tricresylphosphat, Di-n-butylphthalat, Dioctylphthalat, Trichlorethylphosphat, aromatische Ether, wie Benzylphenylether, Kohlenwasserstofföle, wie Paraffin oder Kerosin, z.B. mit Isopropyl, Isobutyl, sek-Butyl oder tert.-Butyl alkylierte Derivate von Diphenyl, Naphthalin oder Terphenyl, Dibenzyltoluol, partiell hydriertes Terphenyl, mono- bis tetra-$C_1$-$C_3$-alkylierte Diphenylalkane, Dodecylbenzol, benzylierte Xylole, oder weitere chlorierte oder hydrierte, kondensierte, aromatische Kohlenwasserstoffe. Oft werden Mischungen verschiedener Lösungsmittel, insbesondere Mischungen aus Paraffinölen oder Kerosin und Diisopropylnaphthalin oder partiell hydriertem Terphenyl, eingesetzt, um eine optimale Löslichkeit für die Farbbildung, eine rasche und intensive Färbung und eine für die Mikroverkapselung günstige Viskosität zu erreichen. Bei der Einkapselung zeichnen sich die erfindungsgemässen Phthalide dadurch aus, dass sie hervorragend löslich sind und pH-Beständigkeit z.B. in einem pH-Bereich von 4 bis 10 zeigen.

Die Kapselwände können durch Koazervationskräfte gleichmässig um die Tröpfchen der Farbbildnerlösung herum gebildet werden, wobei das Einkapselungsmaterial z.B. in der US-Patentschrift 2,800,457 beschrieben ist. Die Kapseln können vorzugsweise auch aus einem Aminoplast oder modifizierten Aminoplasten durch Polykondensation gebildet werden, wie es in den britischen Patentschriften 989,264, 1,156,725, 1,301,052 und 1,355,124 beschrieben ist. Ebenfalls geeignet sind Mikrokapseln, welche durch Grenzflächenpolymerisation gebildet werden, wie z.B. Kapseln aus Polyester, Polycarbonat, Polysulfonamid, Polysulfonat, besonders aber aus Polyamid oder Polyurethan.

Die Farbbildner der Formeln (1) bis (3) enthaltenden Mikrokapseln können zur Herstellung von druckempfindlichen Kopiermaterialien der verschiedensten bekannten Arten verwendet werden. Die verschiedenen Systeme unterscheiden sich im wesentlichen voneinander durch die Anordnung der Kapseln, der Farbreaktanten und durch das Trägermaterial.

Bevorzugt wird eine Anordnung, bei der der eingekapselte Farbbildner in Form einer Schicht auf der Rückseite eines Uebertragungsblattes und der Elektronenakzeptor (Farbentwickler) in Form einer Schicht auf der Vorderseite eines Empfangsblattes vorhanden sind. Eine andere Anordnung der Bestandteile besteht darin, dass die den Farbbildner enthaltenden Mikrokapseln und der Entwickler in oder auf dem gleichen Blatt in Form einer oder mehrerer Einzelschichten oder in der Papierpulpe vorliegen.

Die Kapseln werden vorzugsweise mittels eines geeigneten Binders auf dem Träger befestigt. Da Papier das bevorzugte Trägermaterial ist, handelt es sich bei diesem Binder hauptsächlich um Papierbeschichtungsmittel, wie Gummi arabicum, Polyvinylalkohol, Hydroxymethylcellulose, Casein, Methylcellulose,

Dextrin, Stärke, Stärkederivate oder Polymerlatices. Letztere sind beispielsweise Butadien-Styrolcopolymerisate oder Acryl-homo- oder -copolymere.

Als Papier werden nicht nur normale Papiere aus Cellulosefasern, sondern auch Papiere, in denen die Cellulosefasern (teilweise oder vollständig) durch Fasern aus synthetischen Polymerisaten ersetzt sind, verwendet. Schichtträger kann auch eine Kunstfolie sein.

Vorzugsweise besteht das Durchschreibematerial auch darin, dass es eine kapselfreie, den Farbbildner enthaltende Schicht und eine farbentwickelnde Schicht, die als Farbentwickler mindestens ein anorganisches Metallsalz eines mehrwertigen Metalles, vor allem Halogenide oder Nitrate, wie z.B. Zinkchlorid, Zinnchlorid, Zinknitrat oder deren Gemische enthält, aufweist.

Die Verbindungen der Formeln (1) bis (3) können auch als Farbbildner in einem thermoreaktiven Aufzeichnungsmaterial verwendet werden. Dieses enthält in der Regel mindestens einen Schichtträger, einen oder mehrere Farbbildner, und einen Elektronenakzeptor und gegebenenfalls auch ein Bindemittel und/oder Wachs. Gewünschtenfalls können auch Aktivatoren oder Sensibilisatoren im Aufzeichnungsmaterial vorhanden sein.

Thermoreaktive Aufzeichnungssysteme umfassen, z.B. wärmeempfindliche Aufzeichnungs- und Kopiermaterialien und -papiere. Diese Systeme werden beispielsweise zum Aufzeichnen von Informationen, z.B. in elektronischen Rechnern, Ferndruckern, Fernschreibern oder in Aufzeichnungsgeräten und Messinstrumenten, wie z.B. Elektrocardiographen, verwendet. Die Bilderzeugung (Markierung) kann auch manuell mit einer erhitzten Feder erfolgen. Eine weitere Einrichtung zur Erzeugung von Markierungen mittels Wärme sind Laserstrahlen.

Das thermoreaktive Aufzeichnungsmaterial kann so aufgebaut sein, dass der Farbbildner in einer Bindemittelschicht gelöst oder dispergiert ist und in einer zweiten Schicht der Entwickler in dem Bindemittel gelöst und dispergiert ist. Eine andere Möglichkeit besteht darin, dass sowohl der Farbbildner als auch der Entwickler in einer Schicht dispergiert sind. Die Schicht bzw. Schichten werden in spezifischen Bezirken mittels Wärme erweicht, worauf sich sofort in den erwärmten Teilen die erwünschte Farbe entwickelt.

Als Entwickler eignen sich die gleichen Elektronenakzeptoren, wie sie in druckempfindlichen Papieren verwendet werden. Beispiele für Entwickler sind die bereits erwähnten Tonminerale und Phenolharze, oder auch phenolische Verbindungen, wie sie beispielsweise in der DE-PS 1 251 348 beschrieben sind, z.B. 4-tert.-Butylphenol, 4-Phenylphenol, Methylen-bis-(p-phenylphenol), 4-Hydroxydiphenylether, α-Naphthol, β-Naphthol, 4-Hydroxybenzoesäure-methylester oder -benzylester, 4-Hydroxydiphenylsulfon, 4'-Hydroxy-4-methyldiphenylsulfon, 4'-Hydroxy-4-isopropoxydiphenylsulfon, 4-Hydroxy-acetophenon, 2,2'-Dihydroxydiphenyl, 4,4'-Cyclohexylidendiphenol, 4,4'-Isopropylidendiphenol, 4,4'-Isopropyliden-bis-(2-methylphenol), ein Antipyrinkomplex von Zinkthiocyanat, ein Pyridinkomplex von Zinkthiocyanat, 4,4-Bis-(4-hydroxyphenyl)-valeriansäure, Hydrochinon, Pyrogallol, Phloroglucin, p-, m-, o-Hydroxybenzoesäure, Gallussäure, 1-Hydroxy-2-naphthoesäure sowie Borsäure oder organische, vorzugsweise aliphatische Dicarbonsäuren, wie z.B. Weinsäure, Oxalsäure, Maleinsäure, Zitronensäure, Citraconsäure oder Bernsteinsäure.

Vorzugsweise werden zur Herstellung des thermoreaktiven Aufzeichnungsmaterials schmelzbare, filmbildende Bindemittel verwendet. Diese Bindemittel sind normalerweise wasserlöslich, während die Phthalide und der Entwickler in Wasser schwer löslich oder unlöslich sind. Das Bindemittel sollte in der Lage sein, den Farbbildner und den Entwickler bei Raumtemperatur zu dispergieren und zu fixieren.

Bei Einwirkung von Wärme erweicht oder schmilzt das Bindemittel, so dass der Farbbildner mit dem Entwickler in Kontakt kommt und sich eine Farbe bilden kann. Wasserlösliche oder mindestens in Wasser quellbare Bindemittel sind z.B. hydrophile Polymerisate, wie Polyvinylalkohol, Polyacrylsäure, Hydroxyethylcellulose, Methylcellulose, Carboxymethylcellulose, Polyacrylamid, Polyvinylpyrrolidon, Gelatine, Stärke oder veretherte Maisstärke.

Wenn der Farbbildner und der Entwickler in zwei getrennten Schichten vorliegen, können in Wasser unlösliche Bindemittel, d.h. in nichtpolaren oder nur schwach polaren Lösungsmitteln lösliche Bindemittel, wie z.B. Naturkautschuk, synthetischer Kautschuk, chlorierter Kautschuk, Alkydharze, Polystyrol, Styrol/Butadien-Mischpolymerisate, Polymethylacrylate, Ethylcellulose, Nitrocellulose und Polyvinylcarbazol, verwendet werden. Die bevorzugte Anordnung ist jedoch diejenige, bei der der Farbbildner und der Entwickler in einer Schicht in einem wasserlöslichen Bindemittel enthalten sind.

Um die Stabilität des wärmeempfindlichen Aufzeichnungsmaterials oder die Bilddichte des entwickelten Bildes zu gewährleisten, kann das Material mit einer zusätzlichen Schutzschicht versehen sein. Derartige Schutzschichten bestehen in der Regel aus wasserlöslichen und/oder wasserunlöslichen Harzen, die herkömmliche Polymermaterialien oder wässrige Emulsionen von diesen Polymermaterialien sind.

Die thermoreaktiven Schichten und Harzschichten können weitere Zusätze enthalten. Zur Verbesserung des Weissgrades, zur Erleichterung des Bedruckens der Papiere und zur Verhinderung des Festklebens der erhitzten Feder können diese Schichten, z.B. Talk, Titandioxyd, Zinkoxyd, Aluminiumhydroxyd, Calciumcarbonat (z.B. Kreide), Tone oder auch organische Pigmente, wie z.B. Harnstoff-Formaldehydpolymerisate enthalten. Um zu bewirken, dass nur innnerhalb eines begrenzten Temperaturbereiches die Farbe gebildet wird, können Substanzen, wie Harnstoff, Thioharnstoff, Diphenylthioharnstoff, Acetamid, Acetanilid, Benzolsulfanilid, Stearinsäureamid, Bis-stearoylethylendiamid, Phthalsäureanhydrid, Metallstearate, wie z.B. Zinkstearat, Phthalsäurenitril, Dimethylterephthalat, Dibenzylterephthalat oder andere entsprechende, schmelzbare Produkte, welche das gleichzeitige Schmelzen des Farbbildners und des Entwicklers induzieren, zugesetzt werden. Bevorzugt enthalten thermographische Aufzeichnungsmaterialien Wachse, z.B. Carnaubawachs, Montanwachs, Paraffinwachs, Polyethylenwachs, Kondensate höherer Fettsäureamide und Formaldehyde und Kondensate höherer Fettsäuren und Ethylendiamin.

Eine weitere Anwendung der Verbindungen der Formeln (1) bis (3) ist die Herstellung eines Farbbildes mittels photohärtbarer Mikrokapseln, wie sie z.B. in der DE-OS 3 247 488 beschrieben sind.

In den folgenden Beispielen beziehen sich die angegebenen Prozentsätze, wenn nichts anderes angegeben ist, auf das Gewicht.

Beispiel 1:

11,4 g 3-(3',4',5',6'-Tetrachlor-2'-carboxy-benzoyl)-1-ethyl-2-methylindol und 6,9 g 3-Di-n-butylaminophenol-n-butylether werden in 30 g Essigsäureanhydrid auf 65 °C erwärmt. Man setzt 0,2 g trockenes Zinkchlorid zu, heizt auf 90 °C und hält diese Temperatur während 5 Stunden. Zur blauen Reaktionslösung lässt man bei 60 °C 25 ml Wasser und 22 ml 10 N Natriumhydroxidlösung zutropfen. Man dekantiert, löst den Rückstand in Toluol und behandelt die Toluollösung mit schwach ammoniakalischem Wasser. Die Toluolphase wird abgetrennt und eingeengt. Man erhält 18 g Rohprodukt, welches der Verbindung der Formel

(11)

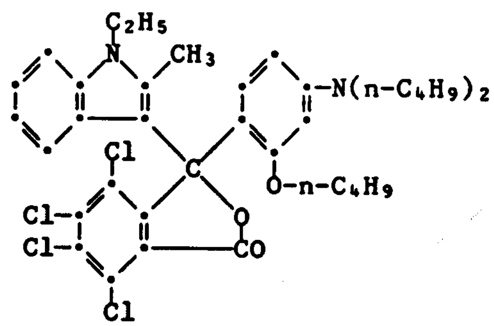

entspricht.

Durch zweimaliges Umkristallisieren aus Isopropylalkohol erhält man eine farblose Verbindung mit einem Schmelzpunkt von 155-157 °C, die in Kapselölen hervorragend löslich ist.

Auf säuremodifiziertem Ton entwickelt diese Phthalidverbindung sofort eine blaue Färbung mit sehr guter Lichtechtheit. Die Färbung fällt durch hohe Farbtiefe und Egalität auf.

Das in Beispiel 1 verwendete 3-Di-n-butylaminophenol-n-butylether wird folgendermassen hergestellt:

22 g 3-Aminophenol werden in 112 g n-Butylbromid verrührt. Bei 20-30 °C wird eine Lösung von 48 g Kaliumhydroxid in 100 ml Wasser zugegeben. Nach Zusatz von 1 g Tetrabutylammoniumbromid heizt man auf Rückfluss und hält während 8 Stunden die Temperatur von 89 °C zu Beginn bis 97 °C am Ende der Reaktion. Man gibt 100 ml Wasser zu und trennt die organische Phase ab. Diese wird noch gewaschen und am Wasserstrahlvakuum destilliert. Man erhält 52,3 g 3-Di-n-butylaminophenol-n-butylether mit einem Siedepunkt von 194-197 °C bei 15 mm/Hg.

Beispiel 2:

9,2 g 3-(2'-Carboxybenzoyl)-1-n-octyl-2-methylindol und 6,9 g 3-Di-n-butylamino-phenol-n-butylether werden in 30 g Essigsäureanhydrid während 20 Minuten bei 55-60 °C gerührt. Die entstandene Lösung wird auf 150 ml Wasser gegossen, mit Toluol bei pH 8-10 extrahiert, worauf die Toluolphase abgetrennt und eingeengt wird. Man erhält 15,1 g einer amorphen Verbindung der Formel

(12) 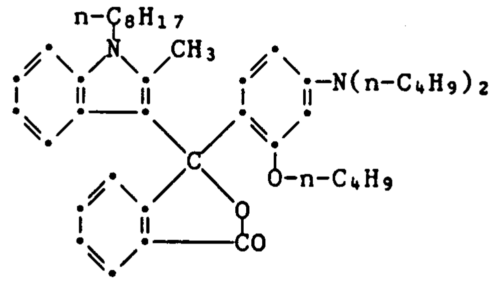

Diese Phthalidverbindung entwickelt auf Phenolharz sofort eine lichtechte, blaue Färbung.

Beispiel 3:

7,7 g 3-(2'-Carboxybenzoyl)-1-ethyl-2-methylindol und 6,9 g Di-n-butylamino-phenol-n-butylether werden in 30 g Essigsäureanhydrird während 1 Stunde bei 80-85 °C gerührt. Nach Aufarbeitung analog Beispiel 1 erhält man 14 g einer Phthalidverbindung der Formel

(13) 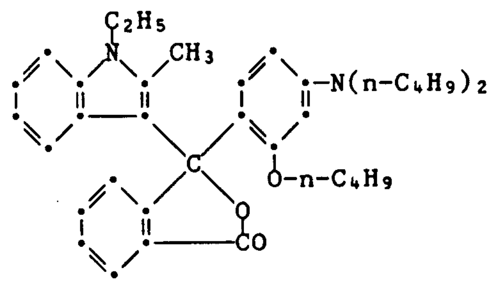

Diese amorphe Verbindung weist einen Erweichungspunkt von 40 °C auf und entwickelt auf säuremodifiziertem Ton sofort ein lichtechte, blaue Färbung.

Auf gleiche Weise wie in den Beispielen 1 bis 3 beschrieben, erhält man unter Verwendung der entsprechenden Ausgangsstoffe die in der folgenden Tabelle aufgeführten Phthalide der Formel

(14) 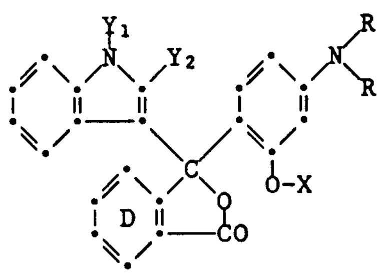

Tabelle

| Bsp. | $Y_1$ | $Y_2$ | D | X | R | Smp. in °C | Farbe |
|---|---|---|---|---|---|---|---|
| 4 | $CH_3$ | 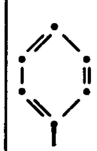 | 4,5,6,7-tetra-chlor-subst. | n-$C_4H_9$ | n-$C_4H_9$ | 165-166 | grün-blau |
| 5 | $C_2H_5$ | $CH_3$ | 4,5,6,7-tetra-chlor-subst. | n-$C_3H_7$ | n-$C_3H_7$ | 180-182 | blau |
| 6 | n-$C_8H_{17}$ | $CH_3$ | 4,5,6,7-tetra-chlor-subst. | n-$C_4H_9$ | n-$C_4H_9$ | 119-120 | blau |
| 7 | n-$C_6H_{13}$ | $CH_3$ | 5/6 $NO_2$-subst. | n-$C_4H_9$ | n-$C_4H_9$ | < 20 (Oel) | blau |
| 8 | $C_2H_5$ | $CH_3$ | 4,5,6,7-tetra-chlor-subst. | n-$C_6H_{13}$ | n-$C_6H_{13}$ | 87-89 | blau |
| 9 | $C_8H_{17}$ | $CH_3$ | 5/6-tert.Butyl-subst. | n-$C_4H_9$ | n-$C_4H_9$ | < 20 (Oel) | blau |

Beispiel 10: Herstellung eines druckempfindlichen Kopierpapiers

Eine Lösung von 3 g des Phthalides der Formel (11) (Beispiel 1) in 80 g Diisopropylnaphthalin und 17 g Kerosin wird auf an sich bekannte Weise mit Gelatine und Gummi arabicum durch Koazervation mikroverkapselt, mit Stärkelösung vermischt und auf ein Blatt Papier gestrichen. Ein zweites Blatt Papier wird auf der Frontseite mit Aktivton als Farbentwickler beschichtet. Das erste den Farbbildner enthaltende Blatt und

das mit Farbentwickler beschichtete Papier werden mit den Beschichtungen benachbart aufeinandergelegt. Durch Schreiben mit der Hand oder mit der Schreibmaschine auf dem ersten Blatt wird Druck ausgeübt, und es entwickelt sich sofort auf dem mit dem Entwickler beschichteten Blatt eine intensive blaue Kopie, die ausgezeichnet lichtecht ist.

Eine entsprechende intensive, lichtechte Kopie wird auch bei Verwendung jedes der anderen in den Herstellungs-Beispielen angegebenen Farbbildner der Beispiele 2 bis 9 erzielt.

Beispiel 11:

1 g des Phthalides gemäss Beispiel 1 wird in 17 g Toluol gelöst. Zu dieser Lösung gibt man unter Rühren 12 g Polyvinylacetat, 8 g Calciumcarbonat und 2 g Titandioxid. Die erhaltene Suspension wird im Gewichtsverhältnis 1:1 mit Toluol verdünnt und mit einem 10 µm Rakel auf ein Blatt Papier gestrichen. Auf dieses Blatt Papier wird ein zweites Blatt Papier gelegt, dessen Unterseite bei einem Auftragsgewicht von 3 $g/m^2$ mit einer Mischung bestehend aus 1 Teil eines Amidwachses, 1 Teil eines Stearinwachses und 1 Teil Zinkchlorid beschichtet ist. Durch Schreiben mit der Hand oder mit der Schreibmaschine auf dem oberen Blatt wird Druck ausgeübt, und es entwickelt sich sofort auf dem mit dem Farbbildner beschichteten Blatt eine intensive und lichtechte blaue Farbe.

Beispiel 12: Herstellung eines wärmeempfindlichen Aufzeichnungsmaterials

In einer Kugelmühle werden 32 g 4,4'Isopropylidendiphenol (Bisphenol A), 3,8 g Distearylamid des Ethylendiamins, 39 g Kaolin, 20 g eines zu 88 % hydrolysierten Polyvinylalkohols und 500 ml Wasser gemahlen bis die Teilchengrösse ca. 5 µm beträgt. In einer zweiten Kugelmühle werden 6 g des Phthalides gemäss Beispiel 1, 3 g eines zu 88 % hydrolysierten Polyvinylalkohols und 60 ml Wasser zu einer Teilchengrösse von ca. 3 µm gemahlen.

Die beiden Dispersionen werden zusammengegeben und mit einem Trockenauftragsgewicht von 5,5 $g/m^2$ auf ein Papier gestrichen. Durch Berührung des Papiers mit einem erhitzten Kugelschreiber wird eine intensive blaue Farbe erhalten, die eine ausgezeichnete Licht- und Sublimierechtheit hat.

Intensive und lichtechte Farben können auch bei Verwendung jedes der anderen Farbbildner gemäss Beispielen 2 bis 9 erhalten werden.

Beispiel 13:

1,2 g des Farbbildners der Formel

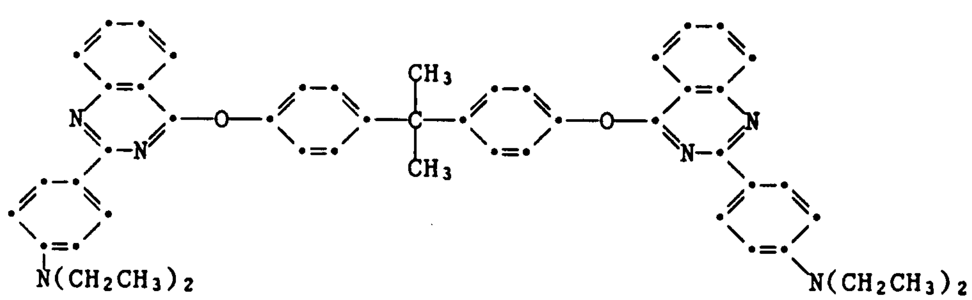

0,6 g 3,3-Bis-(1'-n-octyl-2'-methylindol-3'-yl)phthalid
0,6 g N-Butylcarbazol-3-yl-bis(4'-N-methyl-N-phenylaminophenyl-)methan und
1,2 g des Phthalides gemäss Beispiel 1
werden in 100 g partiell hydriertem Terphenyl bei 70-80 °C gelöst. Die abgekühlte Lösung wird mit einem Tiefdruckgerät auf ein vorgeleimtes und mit aktiviertem Clay beschichtetes Papier gebracht. Es entwickelt sich sofort eine intensive und lichtechte Schwarzfärbung.

## Patentansprüche

1. Chromogene Phthalide der Formel

(1) 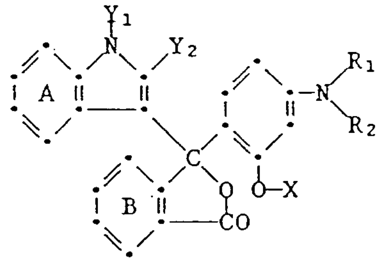

worin X, $R_1$ und $R_2$ identisch sind und je Alkyl mit 3 bis 6 Kohlenstoffatomen, $Y_1$ Wasserstoff, unsubstituiertes oder durch Halogen, Hydroxyl, Cyano oder Niederalkoxy substituiertes Alkyl mit höchstens 12 Kohlenstoffatomen, Acyl mit 1 bis 12 Kohlenstoffatomen oder unsubstituiertes oder durch Halogen, Cyano, Niederalkyl oder Niederalkoxy substituiertes Benzyl und $Y_2$ Wasserstoff, Niederalkyl oder Phenyl bedeuten und die Benzolringe A und B, unabhängig voneinander, unsubstituiert oder durch Halogen, Nitro, Niederalkyl, Niederalkylthio, Niederalkoxy, Niederalkoxycarbonyl, Amino, Mononiederalkylamino, Diniederalkylamino oder Niederalkylcarbonylamino substituiert sind.

2. Phthalide gemäss Anspruch 1, dadurch gekennzeichnet, dass in Formel (1) $Y_1$ Wasserstoff, Alkyl mit 1 bis 8 Kohlenstoffatomen, Acetyl, Propionyl oder Benzyl bedeutet.

3. Phthalide gemäss einem der Ansprüche 1 bis 2, dadurch gekennzeichnet, dass in Formel (1) $Y_2$ Methyl oder Phenyl bedeutet.

4. Phthalide gemäss einem der Ansprüche 1 bis 3, dadurch gekennzeichnet, dass in Formel (1) die Benzolringe A und B unsubstituiert oder durch Halogen, Nitro, Niederalkyl, Niederalkoxy oder Diniederalkylamino substituiert sind.

5. Phthalide gemäss Anspruch 4, dadurch gekennzeichnet, dass der Benzolring B unsubstituiert oder durch 1 bis 4 Halogenatome substituiert ist.

6. Phthalide gemäss einem der Ansprüche 4 und 5, dadurch gekennzeichnet, dass in Formel (1) der Ring A unsubstituiert oder durch Halogen, Niederalkyl oder Niederalkoxy substituiert ist.

7. Phthalide gemäss Anspruch 1, dadurch gekennzeichnet, dass sie der Formel

(2) 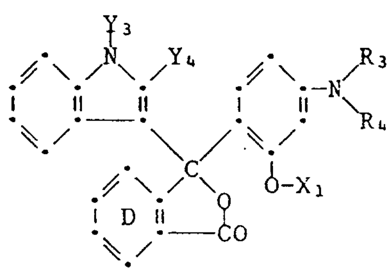

entsprechen, worin $X_1$, $R_3$ und $R_4$ identisch sind und Propyl, Butyl, Pentyl oder Hexyl, $Y_3$ $C_1$-$C_8$-Alkyl und
$Y_4$ Methyl oder Phenyl bedeuten und
der Benzolring D unsubstituiert oder durch Halogen, Niederalkyl oder
Diniederalkylamino substituiert ist.

8. Phthalide gemäss Anspruch 7, dadurch gekennzeichnet, dass in Formel (2) der Benzolring D unsubstituiert oder durch 1 bis 4 Halogenatome substituiert ist.

**9.** Phthalide gemäss Anspruch 1, dadurch gekennzeichnet, dass sie der Formel

(3) 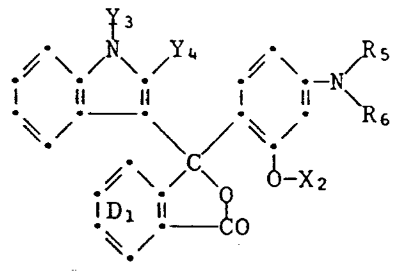

entsprechen, worin
$X_2$, $R_5$ und $R_6$ identisch sind und je n-Propyl oder n-Butyl,
$Y_3$ $C_1$-$C_8$-Alkyl und
$Y_4$ Methyl oder Phenyl bedeuten und
der Benzolring $D_1$ unsubstituiert oder durch vier Chloratome substituiert ist.

**10.** Phthalide gemäss Anspruch 9, dadurch gekennzeichnet, dass in Formel (3) $X_2$, $R_5$ und $R_6$ n-Butyl bedeuten.

**11.** Phthalide gemäss einem der Ansprüche 9 und 10, dadurch gekennzeichnet, dass in Formel (3) $Y_3$ Ethyl, n-Butyl oder n-Octyl, $Y_4$ Methyl, $X_2$, $R_5$ und $R_6$ n-Butyl und der Benzolring $D_1$ durch vier Chloratome substituiert ist.

**12.** Verfahren zur Herstellung von Phthaliden gemäss Anspruch 1, dadurch gekennzeichnet, dass man in beliebiger Reihenfolge ein Mol eines Anhydrids der Formel

(4) 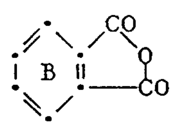

mit einem Mol einer Indolverbindung der Formel

(5) 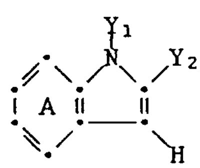

und einem Mol einer Aminobenzolverbindung der Formel

(6) 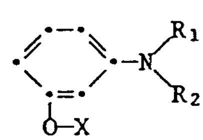

umsetzt, worin in den Formeln (4), (5) und (6) A, B, $R_1$, $R_2$, X, $Y_1$ und $Y_2$ die im Anspruch 1 angegebene Bedeutung haben.

**13.** Verfahren gemäss Anspruch 13, dadurch gekennzeichnet, dass man eine Verbindung der Formel

(7) 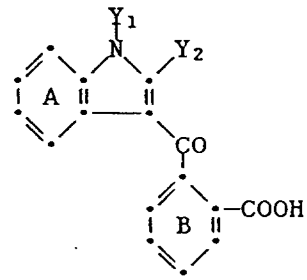

mit einer Aminobenzolverbindung der Formel (6) umsetzt, worin in Formel (7) A, B, $Y_1$ und $Y_2$ die in Anspruch 12 angegebene Bedeutung haben.

**14.** Druck- oder wärmeempfindliches Aufzeichnungsmaterial, dadurch gekennzeichnet, dass es in seinem Farbreaktantensystem als Farbbildner mindestens eine Phthalidverbindung gemäss einem der Ansprüche 1 bis 11 enthält.

**15.** Druckempfindliches Aufzeichnungsmaterial gemäss Anspruch 14, dadurch gekennzeichnet, dass es die Phthalidverbindung, gelöst in einem organischen Lösungsmittel, und mindestens einen festen Elektronenakzeptor enthält.

**16.** Druckempfindliches Aufzeichnungsmaterial gemäss einem der Ansprüche 14 und 15, dadurch gekennzeichnet, dass die Phthalidverbindung in Mikrokapseln eingekapselt ist.

**17.** Druckempfindliches Aufzeichnungsmaterial gemäss Anspruch 16, dadurch gekennzeichnet, dass die eingekapselte Phthalidverbindung in Form einer Schicht auf der Rückseite eines Uebertragungsblattes und der Elektronenakzeptor in Form einer Schicht auf der Vorderseite des Empfangsblattes vorhanden sind.

**18.** Wärmeempfindliches Aufzeichnungsmaterial gemäss Anspruch 14, dadurch gekennzeichnet, dass es in mindestens einer Schicht mindestens eine Phthalidverbindung gemäss einem der Ansprüche 1 bis 11, einen Elektronenakzeptor und gegebenenfalls ein Bindemittel und/oder Wachs enthält.

**19.** Aufzeichnungsmaterial gemäss einem der Ansprüche 14 bis 18, dadurch gekennzeichnet, dass die Phthalidverbindung gemeinsam mit einem oder mehreren anderen Farbbildnern enthalten ist.

## Claims

**1.** A chromogenic phthalide of formula

(1) 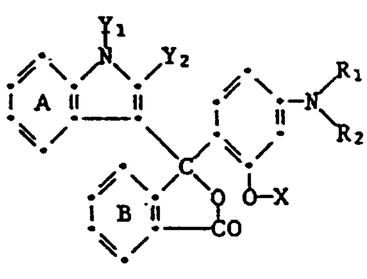

wherein

X, $R_1$ and $R_2$ are identical and are each alkyl of 3 to 6 carbon atoms,

$Y_1$ is hydrogen, alkyl of not more than 12 carbon atoms which is unsubstituted or substituted by halogen, hydroxyl, cyano or lower alkoxy, or is acyl of 1 of 12 carbon atoms, benzyl or benzyl which is substituted by halogen, cyano, lower alkyl or lower alkoxy,

$Y_2$ is hydrogen, lower alkyl or phenyl, and
the benzene rings A and B are each independently of the other unsubstituted or substituted by halogen, nitro, lower alkyl, lower alkylthio, lower alkoxy, lower alkoxycarbonyl, amino, mono-lower alkylamino, di-lower alkylamino or lower alkanoylamino.

2. A phthalide according to claim 1, wherein in formula (1) $Y_1$ is hydrogen, alkyl of 1 to 8 carbon atoms, acetyl, propionyl or benzyl.

3. A phthalide according to either of claims 1 and 2, wherein in formula (1) $Y_2$ is methyl or phenyl.

4. A phthalide according to one of claims 1 to 3, wherein in formula (1) the benzene rings A and B are unsubstituted or substituted by halogen, nitro, lower alkyl, lower alkoxy or di-lower alkylamino.

5. A phthalide according to claim 4, wherein the benzene ring B is unsubstituted or substituted by 1 to 4 halogen atoms.

6. A phthalide according to either of claims 4 and 5, wherein in formula (1) the ring A is unsubstituted or substituted by halogen, lower alkyl or lower alkoxy.

7. A phthalide according to claim 1, of formula

(2) 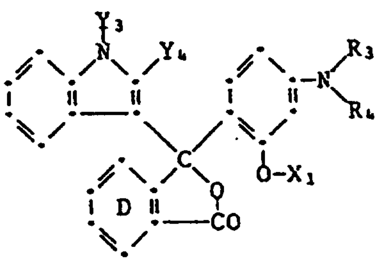

wherein
$X_1$, $R_3$ and $R_4$ are identical and are propyl, butyl, pentyl or hexyl,
$Y_3$ is $C_1$-$C_8$ alkyl,
$Y_4$ is methyl or phenyl, and
the benzene ring D is unsubstituted or substituted by halogen, lower alkyl or di-lower alkylamino.

8. A phthalide according to claim 7, wherein in formula (2) the benzene ring D is unsubstituted or substituted by 1 to 4 halogen atoms.

9. A phthalide according to claim 1, of formula

(3) 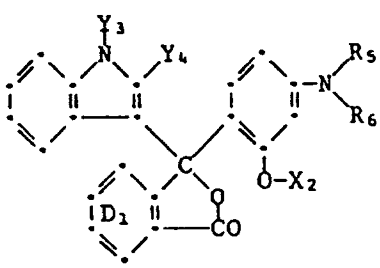

wherein
$X_2$, $R_5$ and $R_6$ are identical and are each n-propyl or n-butyl,
$Y_3$ is $C_1$-$C_8$ alkyl,
$Y_4$ is methyl or phenyl, and
the benzene ring $D_1$ is unsubstituted or substituted by four chlorine atoms.

**10.** A phthalide according to claim 9, wherein in formula (3) $X_2$, $R_5$ and $R_6$ are n-butyl.

**11.** A phthalide according to either of claims 9 and 10, wherein in formula (3) $Y_3$ is ethyl, n-butyl or n-octyl, $Y_4$ is methyl, $X_2$, $R_5$ and $R_6$ are n-butyl and the benzene ring $D_1$ is substituted by four chlorine atoms.

**12.** A process for the preparation of a phthalide according to claim 1, which comprises reacting, in any order, one mole of an anhydride of formula

(4) 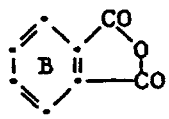

with one mole of an indole compound of formula

(5) 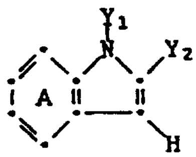

and one mole of an aminobenzene compound of formula

(6) 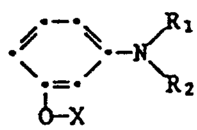

in which in formulae (4), (5) and (6) A, B, $R_1$, $R_2$, X, $Y_1$ and $Y_2$ are as defined in claim 1.

**13.** A process according to claim 12, which comprises reacting a compound of formula

(7) 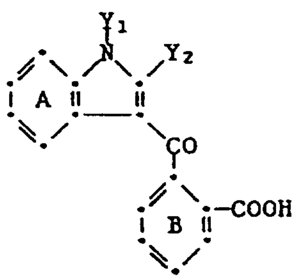

with an aminobenzene compound of formula (6), in which in formula (7) A, B, $Y_1$ and $Y_2$ are as defined in claim 12.

**14.** A pressure-sensitive or heat-sensitive recording material which in its colour reactant system comprises, as color former, at least one phthalide compound according to one of claims 1 to 11.

**15.** A pressure-sensitive recording material according to claim 14, which comprises the phthalide compound dissolved in an organic solvent, and at least one solid electron acceptor.

**16.** A pressure-sensitive recording material according to either of claims 14 and 15, wherein the phthalide compound is encapsulated in microcapsules.

**17.** A pressure-sensitive recording material according to claim 16, wherein the encapsulated phthalide compound is present in the form of a layer on the back of a transfer sheet and the electron acceptor is present in the form of a layer on the face of the receiving sheet.

**18.** A heat-sensitive recording material according to claim 14, which comprises, in at least one layer, at least one phthalide compound according to one of claims 1 to 11, one electron acceptor and if desired one binder and/or wax.

**19.** A recording material according to one of claims 14 to 18, which comprises the phthalide compound together with one or more other color formers.

**Revendications**

**1.** Phtalides chromogènes de formule

(1)

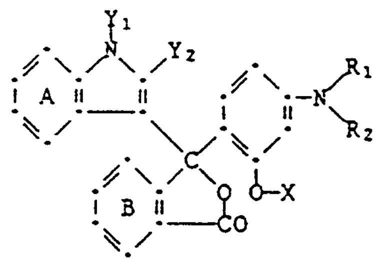

dans laquelle X, $R_1$, et $R_2$ sont identiques et représentent chacun un groupe alkyle comportant de 3 à 6 atomes de carbone, $Y_1$ représente un atome d'hydrogène, un groupe alkyle non substitué ou substitué par un atome d'halogène, un groupe hydroxyle, cyano ou alcoxy inférieur et comportant au plus 12 atomes de carbone, un groupe acyle comportant de 1 à 12 atomes de carbone, ou un groupe benzyle non substitué ou substitué par un halogène, cyano, alkyle inférieur ou alcoxy inférieur, et $Y_2$ représente un atome d'hydrogène, un groupe alkyle inférieur ou phényle, et les noyaux benzéniques A et B sont, indépendamment l'un de l'autre, non substitués ou substitués par un atome d'halogène, un groupe nitro, alkyle inférieur, alcoxy inférieur, alkylthio inférieur, alcoxycarbonyle inférieur, amino, monoalkylamino inférieur, dialkylamino inférieur ou alkylcarbonylamino inférieur.

**2.** Phtalides conformes à la revendication 1, caractérisés en ce que dans la formule (1), $Y_1$ représente un atome d'hydrogène, un groupe alkyle comportant de 1 à 8 atomes de carbone, un groupe acétyle, propionyle ou benzyle.

**3.** Phtalides conformes à une des revendications 1 ou 2, caractérisés en ce que dans la formule (1), $Y_2$ représente un groupe méthyle ou phényle.

**4.** Phtalides conformes à une des revendications 1 à 3, caractérisés en ce que dans la formule (1), les noyaux benzéniques A et B sont non substitués ou substitués par des résidus halogène, nitro, alkyle inférieurs, alcoxy inférieur ou dialkylamino inférieur.

**5.** Phtalides conformes à la revendication 4, caractérisés en ce que le noyau benzénique B est non substitué ou substitué par 1 à 4 atomes d'halogène.

**6.** Phtalides conformes à une des revendications 4 et 5, caractérisés en ce que dans la formule (1), le noyau benzénique A est non substitué ou substitué par un atome d'halogène, un alkyle inférieur ou un alkoxy inférieur.

**7.** Phtalides conformes à la revendication 1, caractérisés en ce qu'ils correspondent à la formule

(2) 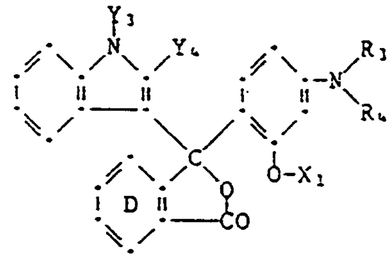

dans laquelle $X_1$, $R_3$ et $R_4$ sont identiques et représentent des résidus propyle, butyle, pentyle ou hexyle, $Y_3$ est un groupe alkyle en $C_1$-$C_8$, $Y_4$ représente un groupe méthyle ou phényle et le noyau benzénique D peut être non substitué ou substitué par un atome d'halogène, un alkyle inférieur ou un dialkylamino inférieur.

**8.** Phtalides conformes à la revendication 7, caractérisés en ce que dans la formule (2), le noyau benzénique D est non substitué ou substitué par 1 à 4 atomes d'halogène.

**9.** Phtalides conformes à la revendication 1, caractérisés en ce qu'ils correspondent à la formule

(3) 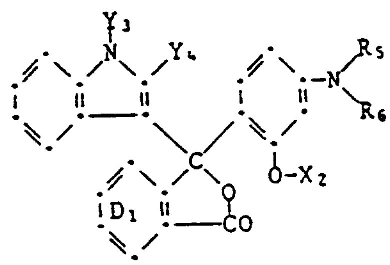

dans laquelle $X_2$, $R_5$ et $R_6$ sont identiques et représentent chacun un groupe n-propyle ou n-butyle, $Y_3$ est un groupe alkyle en $C_1$-$C_8$, $Y_4$ représente un groupe méthyle ou phényle et le noyau benzénique $D_1$ est non substitué ou substitué par 4 atomes de chlore.

**10.** Phtalides conformes à la revendication 9, caractérisés en ce que dans la formule (3), $X_2$, $R_5$ et $R_6$ représentent un groupe n-butyle.

**11.** Phtalides conformes à une des revendications 9 et 10, caractérisés en ce que dans la formule (3), $Y_3$ représente un groupe éthyle, n-butyle ou n-octyle, $Y_4$ un groupe méthyle, $X_2$, $R_5$ et $R_6$ un groupe n-butyle et le noyau benzénique $D_1$ est substitué par 4 atomes de chlore.

**12.** Procédé pour la préparation de phtalides conformes à la revendication 1, caractérisé en ce que l'on fait réagir, dans un ordre quelconque, 1 mole d'un anhydride de formule

(4) 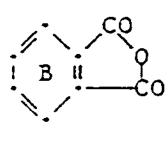

avec 1 mole d'un composé de type indole de formule

(5)

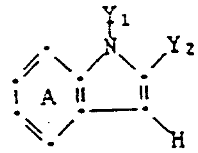

et 1 mole d'un composé de type aminobenzène de formule

(6)

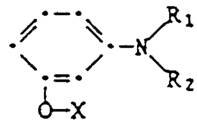

A, B, $R_1$, $R_2$ X, $Y_1$ et $Y_2$ dans les formules (4), (5) et (6) ayant les significations indiquées dans la revendication 1.

**13.** Procédé conforme à la revendication 13, caractérisé en ce que l'on fait réagir un composé de formule

(7)

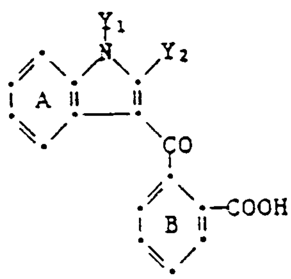

avec un composé de type aminobenzène de formule (6), A, B, $Y_1$ et $Y_2$ dans la formule (7) ayant les significations indiquées dans la revendication 12.

**14.** Matériau d'enregistrement sensible à la pression ou à la chaleur, caractérisé en ce que il contient dans son système de réactifs chromogènes comme agent chromogène au moins un composé de type phtalide conforme à une des revendications 1 à 11.

**15.** Matériau d'enregistrement sensible à la pression conforme à la revendication 14, caractérisé en ce qu'il contient le composé de type phtalide dissous dans un solvant organique et au moins un accepteur d'électrons solide.

**16.** Matériau d'enregistrement sensible à la pression conforme à une des revendications 14 et 15, caractérisé en ce que le composé de type phtalide est encapsulé dans des microcapsules.

**17.** Matériau d'enregistrement sensible à la pression conforme à la revendication 16, caractérisé en ce que le composé de type phtalide encapsulé se trouve sous forme d'une couche sur le côté verso d'une feuille de transfert et que l'accepteur d'électrons se trouve sous forme d'une couche sur le côté recto d'une feuille réceptrice.

**18.** Matériau d'enregistrement sensible à la chaleur conforme à la revendication 14, caractérisé en ce qu'il contient dans au moins une couche au moins un composé de type phtalide conforme à une des revendications 1 à 11, un accepteur d'électrons et éventuellement un liant et/ou une cire.

**19.** Matériau d'enregistrement conforme à une des revendications 14 à 18, caractérisé en ce que le composé de type phtalide est présent à côté d'un ou de plusieurs autres agents chromogènes.